# NEUE EUROPÄISCHE PATENTSCHRIFT

(11) **EP 1 762 546 B2**
(45) Veröffentlichungstag und Bekanntmachung des Hinweises auf die Entscheidung über den Einspruch: **08.10.2014**
(45) Hinweis auf die Patenterteilung: 17.08.2011
(21) Anmeldenummer: 06119862.8
(22) Anmeldetag: 31.08.2006
(51) Int. Cl.: C02F 1/46, C02F 1/461, A47L 15/42

(54) **Verfahren zur elektrochemischen Enthärtung von Wasser in einer Geschirrspülmaschine**
Process for electrochemical descaling of water in a dishwashing machine
Procédé de détartrage éléctrochimique de l'eau dans un lave-vaisselle

(30) Priorität: 09.09.2005 DE 102005043028
(43) Veröffentlichungstag der Anmeldung: 14.03.2007
(73) Patentinhaber: BSH Bosch und Siemens Hausgeräte GmbH, 81739 München (DE)
(72) Erfinder: Classen, Egbert, 86637 Wertingen (DE); Jerg, Helmut, 89537 Giengen (DE); Meinardus, Martin, 89231 Ulm (DE); Paintner, Kai, 86477 Adelsried (DE)

(56) Entgegenhaltungen:
- EP-A- 1 388 595
- EP-A1- 1 036 769
- WO-A-03/099096
- WO-A-2005/087669
- WO-A2-00/64325
- WO-A2-03/096863
- DE-A1- 2 708 240
- DE-A1- 4 107 708
- DE-A1- 19 823 670
- DE-A1-102005 008 506
- DE-C1- 19 852 956
- JP-A- H05 220 483

## Beschreibung

Die Erfindung betrifft ein Verfahren zur elektrochemischen Enthärtung von Wasser in einer Geschirrspülmaschine.

In vielen technischen Anwendungen wird Wasser mit einem möglichst geringen Gehalt an Kalk (Calciumcarbonat CaCO₃) benötigt, wobei Kalk (CaCO₃) in kohlesäurehaltigem Wasser als Calciumhydrogencarbonat (Ca(HCO₃)₂) leicht löslich ist. Insbesondere in Geschirrspülmaschinen wird deshalb enthärtetes Wasser benötigt, um Kalkablagerungen auf dem Geschirr und in Komponenten des Geschirrspülers, z. B. Wärmetauschern, Heizstäben oder an der Oberfläche des Spülbehälters zu vermeiden. Bei Waschmaschinen reduziert sich der Waschmittelbedarf bei weichem Wasser erheblich. Des Weiteren sind auch bei Komponenten von Waschmaschinen, z. B. Heizstäbe oder Wärmetauscher, Kalkablagerungen zu vermeiden, um Schäden am Gerät auszuschließen.

In Geschirrspülmaschinen wird deshalb das Wasser mittels eines lonenaustauschverfahrens enthärtet. Ionenaustauscher sind z. B. Alkalisilikate, die ihre Alkaliionen, z. B. Natriumionen, gegen die Calciumionen und Magnesiumionen des harten Wassers austauschen können. Dadurch kann die Gesamthärte des Wassers abgesenkt werden. Die Carbonat- und die Nichtcarbonathärte bleiben unverändert, weil die Carbonationen nicht entfernt werden. Abhängig von der Rohwasserhärte und -menge ist der Ionenaustauscher nach einer bestimmten Zeit mit Calcium- und Magnesiumionen gesättigt. Es ist eine aufwändige Regeneration des Ionenaustauschers durch Spülen des Systems mit Alkalisalzlösüngen erforderlich, was für den Benutzer eines wasserführenden Haushaltgeräts nachteiligerweise mit einem hohen Aufwand verbunden ist, weil Regeneriersalz gekauft und vorgehalten werden muss sowie mit einem speziellen Programmschritt, im Allgemeinen umständlich in einem gesonderten Behälter in dem Haushaltgerät in Verbindung zu bringen ist. Des Weiteren muss die Salzlösung umweltschädigend in das Abwasser geleitet werden.

Aus der DE 198 23 670 A1 ist ein Verfahren und eine Vorrichtung zur elektrochemischen Enthärtung von Wasser aus Wasserleitungsrohmetzen bekannt. Das Wasser wird in ein mit einer Scheidewand ausgerüsteten Elektrolysegerät mit Anoden- und Kathodenkammer kontinuierlich eingeleitet, und die Enthärtung des Wassers in der Kathodenkammer geschieht durch die elektrochemische Kathodenreaktion mit Sauerstoff, der aus der Anode gebildet wird. Es findet keine elektrolytische Zersetzung des Wassers in der Kathodenkammer statt und Hydroxylionen werden ausschließlich aus dem gebildeten Sauerstoff von der Anodenseite erzeugt. Hierzu ist nachteiligerweise eine gesonderte Umwälzung oder ein Umwälzkreis notwendig. Des Weiteren kann die Scheidewand leicht durch ausgeschiedene Härtesalze verunreinigen, was zu einer sehr nachteiligen Erhöhung des elektrischen und hydraulischen Widerstandes führen kann. Der Energieverbrauch nimmt dann zu und die Entkalkungsleistung ab.

Aus der EP 1 036 769 A1 ist eine Vorrichtung zur elektrolytischen Behandlung von Wasser mit zwei räumlich beabstandeten Elektroden bekannt. Um beliebige geometrische Formen für die Anode realisieren zu können, ist diese als Schüttung von Kohlenstoffpartikeln mit körniger und scharfkantiger Struktur, in welche die Stromzuführung hineinragt, aufgebaut. Ein Diaphragma begrenzt die Schüttung der Kohlenstoffpartikel als Wand, ist jedoch für die wässerige Lösung und elektrischen Strom durchlässig. Aufgrund der losen Schüttung von Kohlenstoffpartikeln ist nachteiligerweise ein gesonderter Behälter und ein kostspieliges Diaphragma erforderlich.

Aus der DE 198 52 956 C1 ist eine Vorrichtung zum Behandeln von Wasser gegen Kalkablagerungen bekannt. Mittels elektrolytischer Bildung von Calciumcarbonatkristallen, die als Impfkristalle den sich bei der Einstellung des Kalk-Kohlensäuregewichts ausfallenden Kalk an sich bilden. Um ein Verkalken der Kathode zu verhindern, ist diese als Rundbürste mit radial von der Bürstenachse abstehenden Borsten ausgebildet. Mittels eines Abstreifers erfolgt das Entfernen der Kalkkristalle von der bürstenförmigen Anode.

Für Hauswasseranlagen wie z. B. aus der DE 27 08 240 ist ein elektrochemisches Verfahren zum Kalkschutz bekannt. In einer Behandlungseinheit befindet sich ein Elektrodenpaar, welches mit Gleichspannung beaufschlagt wird. Durch die Gleichspannung kommt es an der Kathode zur Bildung von OH-Ionen, welche den pH-Wert erhöhen. Dadurch verschiebt sich in der Gleichgewichtsreaktion zwischen CaCO₃, H₂O und CO₂ einerseits und Ca²⁺ und HCO₃⁻ andererseits das Gleichgewicht auf die linke Seite, d. h. es kommt zur Abscheidung von Calciumcarbonat (CaCO₃) an der Kathode. Durch regelmäßige Umpolung in sehr kurzen Zeitabständen der Elektroden werden die Kalkkristalle ständig von der Elektrode abgespült und als mikroskopisch kleine Impfkristalle in einem kontinuierlichen Prozess mit dem durchfließenden Wasser in das Hauswassernetz gespült. Die Enthärtung erfolgt bei diesem Verfahren überwiegend durch die Impfkristalle im Hauswassernetz, deren Wirkung jedoch nur sehr eingeschränkt ist. Die an der Kathode abgeschiedene Calciumcarbonatmenge ist sehr gering, weil diese nur zur Erzeugung von Impfkristallen dient. Dadurch kann nur eine minimale Enthärtung, z. B. unter 2° dH, erreicht werden. Nachteilig ist somit, dass nur eine sehr kleine Enthärtung möglich ist. Aufgrund des kontinuierlichen Durchflussbetriebs während der Enthärtung ist eine Anpassung der Behandlungsparameter, z. B. Wassermenge, Behandlungszeit und Temperatur, nicht möglich. Die Gleichspannung zwischen den Elektroden liegt unterhalb der thermischen Zersetzungsspannung des Wassers von 1,23 V, damit keine schädlichen Nebenprodukte, z. B. Nitrit, Ammonium, durch die Elektrolyse des Wassers entstehen. Weitere elektrochemische Enthärtungsverfahren, die auf ähnlichen Abscheidungsreaktionen beruhen, sind in der WO 00/64325, WO 03/099096 A1, WO 03/096863 A2, EP 1 388 595 A1 angegeben.

Aus der älteren, nachveröffentlichten WO 2005/087669 A1 der Anmelderin ist ein Verfahren zur elektrochemischen, diskontinuierlichen Enthärtung von Wasser in einem wasserführenden Haushaltgerät, z. B. eine Geschirrspülmaschine, mit einem elektrochemischen Reaktor mit einer Kathode und einer Anode bekannt. Außerdem ist ein wasserführendes Haushaltgerät, z. B. eine Geschirrspülmaschine, mit einem elektrochemischen Reaktor zur elektrochemischen Enthärtung von Wasser mit einer Anode und Kathode im elektrochemischen Reaktor beschrieben, wobei das im elektrochemischen Reaktor enthärtete Wasser als Reinigungsflüssigkeit, insbesondere Spülflotte, genutzt wird.

Aufgabe der vorliegenden Erfindung ist es daher, ein Verfahren zur Enthärtung von Wasser in einer Geschirrspülmaschine bereitzustellen, welches es erlaubt, eine besonders effektive und kostengünstige Enthärtung von Wasser zu ermöglichen.

Diese Aufgabe wird durch ein erfindungsgemäßes Verfahren nach Anspruch 1 gelöst. Vorteilhafte Weiterentwicklungen der Erfindung sind durch die abhängigen Ansprüche gekennzeichnet.

Ein erfindungsgemäßes Verfahren zur elektrochemischen, diskontinuierlichen Enthärtung von Wasser in einer Geschirrspülmaschine, mit einem elektrochemischen Reaktor mit einer ersten und einer zweiten Elektrode weist die folgenden Schritten auf:
Einleiten von zu enthärtendem Wasser in einen elektrochemischen Reaktor,
Aufbringen einer elektrischen Spannungsdifferenz zwischen einer ersten Elektrode und einer zweiten Elektrode, um das Wasser in der Behandlungsphase im elektrochemischen Reaktor elektrochemisch zu enthärten und Ausleiten des enthärteten Wassers aus dem elektrochemischen Reaktor zur Verwendung als Reinigungsflüssigkeit, z. B. Spülflotte, in der Geschirrspülmaschine, wobei während einer Behandlungsphase zur elektrochemischen Enthärtung von Wasser die erste Elektrode stets als Anode und die zweite Elektrode stets als Kathode wirkt.
Die erste Elektrode wirkt in der Behandlungsphase im Wesentlichen nur als Anode, so dass sich an der ersten Elektrode im Wesentlichen kein Calciumcarbonat anlagert. Die zweite Elektrode wirkt im Wesentlichen als Kathode, an der sich Calciumcarbonat anlagert. Dadurch kann die erste Elektrode aus einem anderen Material und/oder mit einer anderen Oberflächenstruktur ausgebildet werden als die zweite Elektrode, jeweils spezifisch für die Verwendung als Anode oder Kathode in der Behandlungsphase. Die Anode muß somit über eine ausreichende Oxidationsstabilität verfügen und die Kathode ausreichend Kalk aufnehmen können. Dadurch kann vorteilhafterweise eine gleichmäßige Enthärtungskinetik (-geschwindigkeit) unter sonst gleichen Bedingungen, z. B. Strom, Temperatur, erreicht werden, weil die Elektroden eine gleichmäßige, unter Umständen langsam abnehmende Leistungsfähigkeit aufweisen. Die Steuerung der Enthärtung ist damit genauer durchführbar.

Erfindungsgemäß erfolgt außerhalb der Behandlungsphase eine gerade Anzahl an Umpolungen der Elektroden zum anodischen Entfernen von Kalk (Regenerieren) der zweiten Elektrode, insbesondere vor und nach jeder Regenerationsphase zum Entfernen von Kalk von den Elektroden, eine Umpolung der Elektroden. Dadurch wirkt die zweite Elektrode (im Vergleich zur ungeraden bzw. einfachen Umpolung außerhalb der Behandlungsphase) stets als Kathode in der Behandlungsphase, so dass sich an der ersten Elektrode kein Calciumcarbonat anlagert. Durch das Umpolen in der Regenerationsphase kann die zweite Elektrode anodisch von Kalk befreit werden.

In einer Variante ist während des Ausleitens des enthärteten Wassers aus dem elektrochemischen Reaktor keine elektrische Spannungsdifferenz zwischen Anode und Kathode aufgebracht, um das nach dem Abschalten der elektrischen Spannungsdifferenz zwischen Anode und Kathode verbleibende träge Nachwirken des elektrochemische Enthärtungspotential ausnutzen zu können. Insbesondere bei der Verwendung von der zweiten Elektrode mit einer porösen (Oberflächen-)struktur, z. B. poröse Kohlenstofffilze, tritt auch nach Abschalten der elektrischen Spannungsdifferenz zwischen der ersten Elektrode und der zweiten Elektrode ein träges Nachwirken der Enthärtungswirkung ein. Dies kann damit ausgenützt werden. Die zugeführte Ladungsmenge kann damit besser ausgenutzt werden. Außerdem ist das in den Poren verbleibende Porenwasser nach den Nachspülungen weniger kalklösend als vor den Nachspülungen, so dass eine Aufhärung des Wasser im elektrochemischen Reaktor durch Auflösung der Kalkschichten an der zweiten Elektrode vermieden bzw. verringert wird.

Erfindungsgemäß erfolgt durch eine anodische Kohlensäurebildung eine pH-Wert Absenkung des enthärteten Wassers in den sauren Bereich, um in Klar- und Zwischenspülgängen in der Geschirrspülmaschine Fleckenbildungen zu vermeiden und/oder die Reinigungsleistung zu erhöhen. An der Anode bildet sich Kohlendioxid. Dadurch entsteht Kohlensäure, was die pH-Wert Absenkung bewirkt. Messtechnisch kann beispielsweise der pH-Wert des Wassers im elektrochemischen Reaktor erfasst werden und die Strom- und/oder Spannungsstärke an den Elektroden entsprechend gesteuert werden, dass der gewünschte pH-Wert vorhanden ist. Das sauere enthärtete Wasser ist kalklösend und verhindert somit in Geschirrspülmaschinen eine Fleckenbildung durch Kalk.

In einer weiteren Ausführungsform werden an der Kathode sich bildende Calciumcarbonatkristalle wenigstens teilweise vom enthärteten Wasser zur Verwendung als Reinigungsflüssigkeit mitgenommen, so dass die Calciumcarbonatkristalle als Impfkristalle wirken, an denen sich ausfallender Kalk anlagern kann. Dadurch können beispielsweise Kalkablagerungen an Spülgut in einer Geschirrspülmaschine vermieden oder reduziert werden.

In einer weiteren Ausführungsform wird das enthärtete Wasser in einem gesonderten Zwischenspeicher vor der Verwendung als Reinigungsflüssigkeit zwischengespeichert.

Vorzugsweise besteht die erste Elektrode und die zweite Elektrode aus unterschiedlichem Material. Da in der Behandlungsphase die erste Elektrode als Anode und die zweite Elektrode als Kathode wirkt, können aufgrund der unterschiedlichen Verwendung der ersten und zweiten Elektrode die entsprechend optimalen Materialien jeweils für die Anode und Kathode gewählt werden. In einer durch gerades Umpolen durchgeführten Regenerationsphase bleibt innerhalb der Regenerationsphase die Verwendung der ersten und zweiten Elektrode als Anode oder Kathode gleich, ist somit lediglich gegenüber der Behandlungsphase vertauscht.

In einer weiteren Ausführungsform verfügt wenigstens eine Elektrode wenigstens teilweise über eine Porenstruktur. Vorzugsweise wird die Porenstruktur für die Kathode, d. h. für die zweite Elektrode, gewählt, weil sich hier Calciumcarbonat anlagert. Dies ermöglicht das schnelle und effektive Entkalken des Wassers. Aufgrund der Porenstruktur können sich große Mengen an Carbonatsalzen an der Kathode anlagern, so dass eine Regeneration nur in großen Zeitabständen notwendig ist.

Zweckmäßigerweise besteht die zweite Elektrode wenigstens teilweise aus Graphit- oder Kohlenstofffilzen, vorzugsweise als äußere Ummantelung von Metallteilen im Inneren der Anode zum Leiten des Stromes, die eine hohe Affinität zu Erdalkalisalzen, z. B. Carbonatsalze, aufweisen, um das Anlagern z. B. der Carbonatsalze an die Elektroden zu erleichtern. Die hohe Affinität des Graphits und Kohlenstoffs insbesondere zu Carbonatsalzen ermöglicht das schnelle und effektive Entkalken des Wassers. Es liegt somit eine hohe Affinitätstrennung zwischen Kohlendioxid und Erdalkalisalzen vor. Diese hohe Grenzflächenaffinität ermöglicht deshalb das schnelle und effektive Entkalken des Wassers.

In einer weiteren Ausführungsform besteht die erste Elektrode aus Titan, Titanlegierungen oder beschichteten Titanmetall (z. B. mit Mischoxiden), z. B. als Flach- oder Streckmetall, oder anderen Metallen zum Leiten des Stromes.

In einer bevorzugten Ausführungsform weist die erste Elektrode eine glatte Oberflächenstruktur auf.

Zweckmäßigerweise wird die Enthärtungsgeschwindigkeit mit den Parametern Umwälzgeschwindigkeit des Wassers im elektrochemischen Reaktor und/oder Anströmgeschwindigkeit des Wassers an die Elektroden und/oder der Temperatur des Wassers im elektrochemischen Reaktor und/oder der Stromdichte an den Elektroden und/oder der angelegten Spannungsdifferenz an den Elektroden und/oder dem pH-Wert des Wassers im elektrochemischen Reaktor gesteuert. Dies ermöglicht eine einfache und effektive Steuerung des Enthärtens, wobei die einzelnen Parameter durch eine vorzugsweise elektronische oder elektrische Steuerung festgelegt werden.

Vorteilhafterweise kann die Temperatur des Wassers im elektrochemischen Reaktor mit einer Heizung erhöht werden und/oder die Umwälzgeschwindigkeit und/oder die Anströmgeschwindigkeit des Wassers im elektrochemischen Reaktor mit einer Umwälzpumpe und/oder einem Umwälzrotor im elektrochemischen Reaktor gesteuert werden und/oder der pH-Wert des Wassers im elektrochemischen Reaktor durch das Auslassen des beim Enthärten entstehenden Kohlendioxids aus dem geschlossenen elektrochemischen Reaktor mit einem Entlüftungsventil gesteuert werden.

In einer weiteren Ausführungsform wird in einer Regenerationsphase wenigstens eine Elektrode von Kalk befreit, indem die Elektroden nach dem erfindungsgemäßen Prinzip umgepolt werden und der Kalk auf wenigstens einer Elektrode mechanisch, z. B. durch Anströmen von Wasser oder mit einer Bürste, entfernt wird, oder die Elektroden nach dem erfindungsgemäßen Prinzip umgepolt werden und durch Spülung der Elektroden mit einer sauren Lösung, z. B. einer Lösung mit Zitronensäure, der Kalk entfernt wird. Dadurch können die Elektroden einfach, schnell und effektiv von Kalk befreit werden.

Eine Geschirrspülmaschine umfasst vorteilhafter Weise einen elektrochemischen Reaktor mit einer ersten und einer zweiten Elektrode zur elektrochemischen Enthärtung von Wasser, wobei das im elektrochemischen Reaktor enthärtete Wasser als Reinigungsflüssigkeit, insbesondere Spülflotte, genutzt wird und die erste Elektrode und die zweite Elektrode wenigstens teilweise aus einem unterschiedlichem Material oder Werkstoff bestehen. Der Verwendung von unterschiedlichem Material für die erste und zweite Elektrode ist sinnvoll, weil die erste und zweite Elektrode in der Behandlungsphase die gleiche Verwendung als Kathode oder Anode finden.

Vorzugsweise verfügt wenigstens eine Elektrode wenigstens teilweise über eine Porenstruktur. Insbesondere die Kathode verfügt über eine Porenstruktur, weil sich an die Kathode das Calciumcarbonat anlagert.

In einer weiteren Ausführungsform besteht die zweite Elektrode wenigstens teilweise aus Graphit- oder Kohlenstofffilzen, die eine hohe Affinität zu Erdalkalisalzen, z. B. Carbonatsalze, aufweisen, um das Anlagern z. B. der Carbonatsalze an die Elektroden zu erleichtern.

Zweckmäßigerweise besteht die erste Elektrode aus Titan, Titanlegierungen oder beschichteten Titanmetall, z. B. als Flach- oder Streckmetall, oder anderen Metallen zum Leiten des Stromes.

In einer weiteren Ausführungsform weist die Anode eine glatte Oberflächenstruktur auf.

Vorteilhafterweise verfügt der elektrochemische Reaktor über eine Heizung, einen Rohwasserzulauf, ein Ablassventil, ein Entlüftungsventil und eine Umwälzpumpe.

Erfindungsgemäß ist in einer Behandlungsphase zur elektrochemischen Enthärtung von Wasser eine erste Elektrode stets die Anode und eine zweite Elektrode stets die Kathode.

Nachfolgend wird die Erfindung anhand einer Zeichnung beispielhaft näher erläutert. Es zeigt:

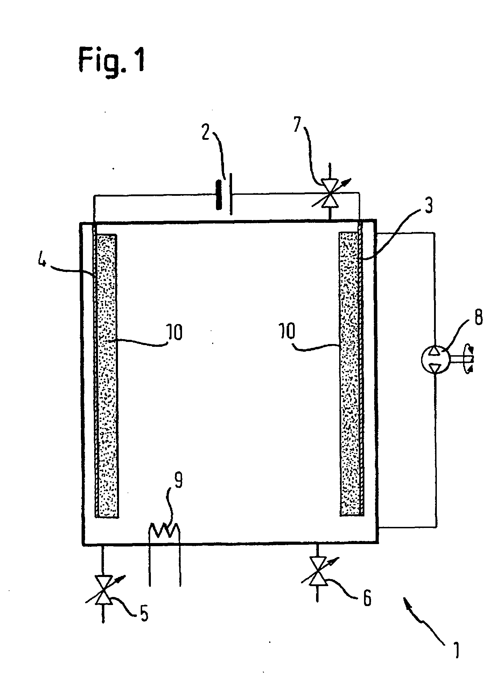

- Figur 1: einen schematisierten Querschnitt durch einen elektrochemischen Reaktor in einer Geschirrspülmaschine.

Figur 1 zeigt einen Querschnitt durch einen elektrochemischen Reaktor 1, in welchem sich das zu enthärtende Wasser befindet. Im elektrochemischen Reaktor 1 sind eine z. B. stab- oder plattenförmige erste Elektrode 3 und zweite Elektrode 4 beispielsweise aus Titan oder Kohlenstoff angeordnet, welche von einem Kohlenstofffilz 10 überzogen ist. Die Elektroden 3, 4 können konstruktiv aus Einzelelektroden 3, 4 wie beispielsweise in Fig. 1 dargestellt bestehen, werden jedoch insgesamt als Elektroden 3, 4 behandelt (nicht in Fig. 1 dargestellt). Der Kohlenstofffilz 10 ist, weil er ebenfalls Elektrodenwirkung hat, Teil der Elektroden 3, 4. Die z. B. plattenförmigen Elektroden 3, 4 im Inneren des Kohlenstofffilzes dienen im Wesentlichen zum Leiten des Stromes. Die Elektroden 3, 4 sind an eine Gleichspannungsquelle 2 angeschlossen. Über den Rohwasserzulauf 5 wird Wasser in den elektrochemischen Reaktor 1 eingeleitet und nach dem Enthärten über das Ablassventil 6 zur Verwendung als Spülflotte in einer Geschirrspülmaschine nach einer Enthärtung abgeleitet, wobei das Ablassventil 6 auch zum Ableiten von Ablagerungen bzw. Sedimentationen am Boden des elektrochemischen Reaktors 1 dienen kann. Während des Enthärtens in einer Behandlungsphase wird vorzugsweise im Wesentlichen kein Wasser durch den elektrochemischen Reaktor 1 geleitet. Über ein Entlüftungsventil 7 kann der elektrochemische Reaktor 1 entlüftet werden, beispielsweise zum Ableiten von beim Enthärten an der Anode 3 auftretendem Kohlendioxid. Das Kohlendioxid bildet mit dem Wasser im elektrochemischen Reaktor Kohlensäure. Dadurch kommt es zu einer Absenkung des pH-Wertes des Wassers in den sauren Bereich. Das enthärtete Wasser ist damit sauer und hat kalklösende Eigenschaften. Dadurch kann eine Fleckenbildung auf dem Spülgut in der Geschirrspülmaschine verhindert werden und/oder zur Unterstützung der Reinigungsleistung genutzt werden. Diese anodische Kohlensäurebildung wird in Klar- und Zwischenspülgängen eingesetzt. Durch Sensoren wird der pH-Wert des Wassers erfasst und die Strom- und/oder Spannungsstärke der Elektroden und/oder das Entlüften des Kohlendioxids entsprechend angesteuert, so dass der gewünschte pH-Wert erreicht wird. Mit einer Heizung 9 kann die Temperatur des Wassers im elektrochemischen Reaktor 1 erhöht werden.

Die Entkalkung des Wassers im elektrochemischen Reaktor 1 erfolgt durch das Anlegen einer Gleichspannung während einer Behandlungsphase an die Elektroden 3, 4 durch kathodische Abscheidung von Erdalkalisalzen, z. B. Carbonatsalz, an der Kathode 4 als zweite Elektrode 4. An der Kathode 4 bilden sich OH⁻-Ionen, wodurch sich der pH-Wert erhöht in dem alkalischen Bereich in der Umgebung der Kathode 4. Dies führt in der Gleichgewichtsreaktion zwischen Ca²⁺, CO₃²⁻, H₂O und CO₂ auf der linken Seite und Ca²⁺ sowie HCO₃⁻ auf der rechten Seite zu einer Verschiebung des Gleichgewichts auf die linke Seite. Dadurch erhöht sich die Konzentration an CO₃²⁻. Aufgrund des kleinen Löslichkeitsprodukts von Ca²⁺, CO₃²⁻ gegenüber Ca²⁺, 2HCO₃⁻ kommt es zu einer Ausfällung von Calciumcarbonat (CaCO₃) an der Kathode. Aufgrund der hohen Affinität des Kohlenstofffilzes 10 zum Festkörper Calciumcarbonat fällt vorteilhafterweise Calciumcarbonat besonders leicht aus, und es können auch größere Mengen an Calciumcarbonat an der Kathode angelagert werden. Der Kohlenstofffilz verfügt aufgrund seines strukturierten, aufgerauten, porösen Aufbaus über eine besonders große Oberfläche, so dass sich vorteilhafterweise besonders große Mengen an Alkalicarbonat, z. B. Calciumcarbonat, leicht anlagern. Durch besondere Kathodenformen kann die zur Verfügung stehende Oberfläche weiter erhöht werden, z. B. mit einem stapelartigem Aufbau mit mehreren, übereinander liegenden Schichten. Die Form der Elektroden kann vorteilhafterweise auch an die geometrischen Gegebenheiten des elektrochemischen Reaktors 1, der durch den Aufbau des Geschirrspülers bedingt ist, angepasst werden. Dies geschieht beispielsweise durch einen plattenförmigen Aufbau der Elektroden oder durch Wickelelektroden, in denen die beiden Elektroden 3, 4 in einem Abstand zueinander gewickelt angeordnet sind sowie durch die Größe der Elektroden 3, 4. Es besteht auch die Möglichkeit, je nach Bedarf und verfügbarem Platz mehr als zwei Elektroden 3, 4 im elektrochemischen Reaktor 1 zu integrieren.

Eine in den chemischen Reaktor 1 über den Rohwasserzulauf eingeleitete bestimmte Wassermenge wird dadurch während Behandlungsphasen, d. h. bei angelegter Gleichspannung an den Elektroden 3, 4, durch das Entfernen von z. B. Carbonatsalzen enthärtet. Es liegt ein diskontinuierliches Wasserenthärtungsverfahren vor, weil dies nicht ständig ausgeführt wird. Erfolgt keine Umpolung der Elektroden 3, 4 wird vorzugsweise auch während des Einleitens und Ausleitens von Wasser in den elektrochemischen Reaktor 1 eine elektrische Spannungsdifferenz auf die Elektroden 3, 4 aufgebracht, d. h. die Behandlungsphase ausgeführt. Es kann auch während des Ausleitens des enthärteten Wassers aus dem elektrochemischen Reaktor 1 keine elektrische Spannungsdifferenz auf die Elektroden 3, 4 aufgebracht werden, um das nach dem Abschalten der elektrischen Spannungsdifferenz zwischen Anode und Kathode verbleibende träge Nachwirken des elektrochemischen Enthärtungspotentials ausnutzen zu können. In Geschirrspülmaschine können hinsichtlich der Entkalkung im Allgemeinen klar definierte Vorgaben, z. B. die notwendige Wassermenge und die Zeitzyklen, gemacht werden. Zwischen diesen Vorgaben und den Behandlungsparametern, z. B. der Elektrodenoberfläche, der angelegten Spannung an den Elektroden 3, 4, der Temperatur des Wassers im elektrochemischen Reaktor 1, der Stromdichte an den Elektrodenoberflächen, d. h. das Verhältnis aus Strom zur Elektrodenoberfläche, und der Zirkulation, insbesondere der Anströmgeschwindigkeit des Wassers an die Elektroden 3, 4 und der Umwälzgeschwindigkeit des Wassers im elektrochemischen Reaktor 1 kann der Enthärtungsvorgang sehr einfach und genau insbesondere auch vorab gesteuert oder geregelt werden.

Zur Erhöhung der Enthärtungsgeschwindigkeit kann mittels einer Pumpe 8 eine Zirkulation im elektrochemischen Reaktor 1 oder eine bestimmte Anströmgeschwindigkeit an die Elektroden 3, 4 erzeugt werden. Das ist auch mit einem Umwälzrotor im elektrochemischen Reaktor 1 möglich (nicht dargestellt). Mit einer Heizung 9 kann die Temperatur des Wassers im elektrochemischen Reaktor 1 erhöht werden und damit auch die Enthärtungsgeschwindigkeit. Die elektrischen Größen können vorteilhafterweise unabhängig von der Entstehung von Nebenprodukten, z. B. Nitrit- und Ammoniumionen, an das gewünschte Enthärtungsergebnis angepasst werden. Es ist ein potentiostatischer Betrieb mit konstanter Spannung und ein amperostatischer Betrieb mit konstantem Strom möglich. Vorspannungen über 2,6 V sind aufgrund des Entlüftungsventils 7 und des Ablassventils 6 möglich, weil entstehende Gase, insbesondere Kohlendioxid CO₂, und andere Nebenprodukte aus dem elektrochemischen Reaktor 1 entfernt werden können. Mit Hilfe des freiwerdenden Kohlendioxids CO₂ ist eine zusätzliche Steuerung der Enthärtungsgeschwindigkeit durch Einwirkung auf die Gleichgewichtsreaktion zwischen Carbonat CO₃²⁻ und Hydrogencarbonat HCO₃⁻ möglich, weil CO₂ mit Wasser Kohlensäure bildet, der den pH-Wert senkt und dadurch weniger Calciumcarbonat ausfällt. Die Steuerung und Regelung des Enthärtungsvorgangs im elektrochemischen Reaktor 1 ist damit sehr einfach und genau möglich.

Die Enthärtung der Elektroden 3, 4 erfolgt in einer Regenerationsphase. Nach einer gewissen Anzahl an Behandlungsphasen kommt es zur Sättigung der Kalkaufnahmefähigkeit an den Elektroden 3, 4 mit Graphitfilz 10. Nach einer derartigen Sättigung des Graphitfilzes 10 an den Elektroden 3, 4 kann sich auch das gebildete Calciumcarbonat selbständig, beispielsweise durch Abblättern, lösen. Die Zeit bis zur Sättigung des Graphitfilzes 10 an der Kathode 4 hängt von verschiedenen Rahmenparametern, z. B. Elektrodenoberfläche, Anzahl der Spül- und Waschgänge, Waschverbrauch während des Spülablaufs und der Härte des Rohwassers ab. Die Kathode 4 ist hierzu zu regenerieren, d. h. von Kalk zu befreien, um nachteilige Sedimentationen von Kristallagglomeraten bei Enthärtungen gänzlich zu vermeiden oder diese zu reduzieren und die Enthärtungsgeschwindigkeit insgesamt zu erhalten.

Die Regeneration der Elektroden 3, 4 kann durch eine geradzahlige Umpolung der Elektroden 3, 4 ausgeführt werden. Dabei wird vor und nach jeder Regenerationsphase eine geradzahlige Umpolung der Elektroden 3, 4 ausgeführt. Dadurch wirkt die zweite Elektrode 4 stets als Kathode 4 und die erste Elektrode 3 stets als Anode 3 in der Behandlungsphase, umgekehrt jedoch in der Regenerationsphase. Aufgrund dieser nicht wechselnden Verwendung der Elektroden 3, 4 ist unterschiedliches Material für die erste und zweite Elektrode 3, 4 sinnvoll, welches auf die entsprechende Verwendung als Anode oder Kathode spezifisch ausgerichtet ist. Die Carbonatsalze werden anodisch in der Regenerationsphase aufgelöst, was zu einer Aufhärtung des Wassers im elektrochemischen Reaktor 1 führt. Andererseits können Carbonatsalzkristalle auch von den Elektroden 3, 4 abgesprengt und nachfolgend mit dem aufgehärteten Wasser ausgespült werden. Diese Calciumcarbonatkristalle wirken als Impfkristalle in der Spülflotte der Geschirrspülmaschine, an denen sich ausfallender Kalk bevorzugt anlagert. Dadurch können Kalkablagerungen am Spülgut verhindert oder reduziert werden. Für eine effektive Kalkentfernung von den Elektroden bei den Umpolungsphasen ist eine Mindeststromdichte an den Elektroden 3, 4 notwendig, die üblicherweise über der Stromdichte zum Enthärten während der Behandlungsphasen liegt. In Kombination zur erfindungsgemäßen Umpolung können zur Regeneration der Elektroden 3, 4 die abgeschiedenen Kalkmengen mechanisch entfernt werden. Dies erfolgt beispielsweise durch eine bestimmte, relativ große Anströmung der Elektroden 3, 4 mit Wasser im elektrochemischen Reaktor 1 oder durch spezielle Bürsten, die in dem elektrochemischen Reaktor 1 angeordnet sind und durch eine entsprechende Bewegung den Kalk vom Kohlenstofffilz 10 der Elektroden 3, 4 entfernen oder durch eine Veränderung der geometrischen Form des Kohlenstofffilzes 10, z. B. von plattenförmig auf gewellt und umgekehrt (nicht dargestellt). In einer ergänzenden Variante zur erfindungsgemäßen Umpolung ist es auch möglich, die Regeneration durch Spülung der Elektroden 3, 4 mit einer sauren Lösung, z. B. einer Zitronensäurelösung, auszuführen. Des Weiteren kann die Regeneration natürlich durch eine Kombination mit zwei oder drei der oben beschriebenen Varianten ausgeführt werden. Das während der Regenerationsphase entstehende aufgehärtete "Regenerierwasser" kann unter Umständen auch in speziellen Spülphasen als Spülflotte verwendet werden, so dass kein unnötiger Wasserverbrauch stattfindet.

Die elektrochemische Enthärtung kann vor, während und nach Spülphasen, d. h. Teilprogrammschritten in der Geschirrspülmaschine, erfolgen. Das enthärtete Wasser wird entweder im elektrochemischen Reaktor 1 oder in einem gesonderten Zwischenspeicher (nicht dargestellt) für die Verwendung als Spülflotte zwischengespeichert. Das Wasser wird somit für den nächsten Teilprogrammschritt innerhalb eines Reinigungsprogramms vorbereitet, d. h. während einer Vorhaltephase entsprechend vorgehalten. Die Enthärtungsgeschwindigkeit wird je nach Ausgangshärte des Rohwassers und dem gewünschten Härtegrad für die Spülflotte entsprechend der oben dargestellten Parameter gesteuert oder geregelt. Dabei besteht auch die Möglichkeit, je nach Bedarf, das enthärtete Wasser mit nicht enthärtetem Rohwasser zu mischen.

Der elektrochemische Reaktor 1 kann an verschiedenen beliebigen Stellen innerhalb der Geschirrspülmaschine angeordnet werden. Aufgrund nahezu beliebiger Bauformen des elektrochemischen Reaktors 1 kann hier eine optimale Anpassung erfolgen. Beispielsweise kann er an den Seitenwänden, z. B. in Integration mit einem Wärmetauscher, ausgeführt werden oder in der Tür einer Wand des Spülbehälters oder oberhalb der Deckenwandung des Spülbehälters. Des Weiteren ist auch eine Anordnung unterhalb der Bodenwandung des Spülbehälters im Aggregateraum möglich.

Die Vorteile des erfindungsgemäßen Verfahrens liegen darin, dass eine wenigstens gleichwertige Enthärtungsleistung im Vergleich zu bekannten Ionenaustauschern möglich ist. Dabei ist vorteilhafterweise keine Verwendung von Zusatzstoffen, d. h. Enthärtersalz, notwendig. Es findet eine tatsächliche Entsalzung (Salzreduktion) statt mit einer positiven Wirkung auf verbleibende Salzmengen in Trocknungsflecken auf dem Geschirr. Aufgrund der nicht notwendigen Verwendung von Regeneriersalz ergibt sich für den Benutzer einer Geschirrspülmaschine sowohl eine Kostenersparnis als auch eine deutliche Komforterhöhung, weil kein Regeneriersalz vorgehalten und verwendet werden muß und es handelt sich um einen Beitrag zum Umweltschutz. Der Wasserverbrauch in der Geschirrspülmaschine sinkt, weil mit dem erfindungsgemäßen elektrochemischen Reaktor eine größere Wassermenge nach der Regenerationsphase entkalkt werden kann, als mit einem Ionenaustauscher nach der Regeneration mit Enthärtersalz. Sowohl der Ionenaustauscher als auch der elektrochemische Reaktor gemäß der Erfindung benötigen zum Regenerieren Wasser. Vorteilhafterweise kann gegebenenfalls beim erfindungsgemäßen elektrochemischen Reaktor das aufgehärtete "Regenerierwasser" wiederverwendet werden, was beim lonenaustauschverfahren nicht möglich ist. Dadurch benötigt die Geschirrspülmaschine noch weniger Wasser.

## Patentansprüche

1. Verfahren zur elektrochemischen, diskontinuierlichen Enthärtung von Wasser in einer Geschirrspülmaschine mit einem elektrochemischen Reaktor (1), mit einer ersten und einer zweiten Elektrode (3, 4), indem
- zu enthärtendes Wasser in den elektrochemischen Reaktor (1) eingeleitet wird,
- eine elektrische Spannungsdifferenz zwischen der ersten Elektrode (3) und der zweiten Elektrode (4) aufgebracht wird, um das Wasser in einer Behandlungsphase im elektrochemischen Reaktor (1) elektrochemisch zu enthärten,
- das enthärtete Wasser aus dem elektrochemischen Reaktor (1) zur Verwendung als Reinigungsflüssigkeit, z. B. Spülflotte, in der Geschirrspülmaschine, ausgeleitet wird,
- in einer Behandlungsphase die erste Elektrode stets als Anode (3) und die zweite Elektrode (4) stets als Kathode (4) wirkt, wobei an der Kathode (4) OH -Ionen gebildet werden,
wobei durch eine anodische Kohlensäurebildung eine pH-Wert Absenkung des enthärteten Wassers in den sauren Bereich erfolgt, um in Klar- und Zwischenspülgängen in der Geschirrspülmaschine Fleckenbildungen zu vermeiden und/oder die Reinigungsleistung zu erhöhen, und
- eine gerade Anzahl an Umpolungen der Elektroden (3, 4), insbesondere vor und nach jeder Regenerationsphase, außerhalb der Behandlungsphase erfolgt.

2. Verfahren nach Anspruch 1, **dadurch gekennzeichnet, dass** die erste Elektrode (3) und die zweite Elektrode (4) wenigstens teilweise aus einem unterschiedlichen Material oder Werkstoff bestehen.

3. Verfahren nach einem der vorhergehenden Ansprüche, **dadurch gekennzeichnet, dass** während des Ausleitens des enthärteten Wassers aus dem elektrochemischen Reaktor (1) keine elektrische Spannungsdifferenz zwischen der ersten Elektrode (3) und der zweiten Elektrode (4) aufgebracht ist, um das nach dem Abschalten der elektrischen Spannungsdifferenz zwischen der ersten Elektrode (3) und zweiten Elektrode (4) verbleibende träge Nachwirken des elektrochemischen Enthärtungspotentials ausnutzen zu können.

4. Verfahren nach einem der vorhergehenden Ansprüche, **dadurch gekennzeichnet, dass** die an der Kathode (4) sich bildenden Calciumcarbonatkristalle wenigstens teilweise vom enthärteten Wasser zur Verwendung als Reinigungsflüssigkeit mitgenommen werden, so dass die Calciumcarbonatkristalle als Impfkristalle wirken, an denen sich ausfallender Kalk anlagert.

5. Verfahren nach einem der vorhergehenden Ansprüche, **dadurch gekennzeichnet, dass** das enthärtete Wasser in einem gesonderten Zwischenspeicher vor der Verwendung als Reinigungsflüssigkeit zwischengespeichert wird

6. Verfahren nach einem der vorhergehenden Ansprüche, **dadurch gekennzeichnet, dass** wenigstens eine Elektrode (3, 4) wenigstens teilweise über eine Porenstruktur verfügt.

7. Verfahren nach einem der vorhergehenden Ansprüche, **dadurch gekennzeichnet, dass** die zweite Elektrode (4) wenigstens teilweise aus Graphit- oder Kohlenstofffilzen (10), vorzugsweise als äußere Ummantelung zu Metallteilen im Inneren der zweiten Elektrode (4) zum Leiten des Stromes, bestehen, die eine hohe Affinität zu Erdalkalisalzen, z. B. Carbonatsalze, aufweisen, um das Anlagern z. B. der Carbonatsalze an die Elektroden (3, 4) zu erleichtern.

8. Verfahren nach einem der vorhergehenden Ansprüche, **dadurch gekennzeichnet, dass** die Anode (3) aus Titan, Titanlegierungen oder beschichteten Titanmetall, z. B. als Flach- oder Streckmetall, oder anderen Metallen zum Leiten des Stromes bestehen.

9. Verfahren nach Anspruch 8, **dadurch gekennzeichnet, dass** die erste Elektrode (3) eine glatte Oberflächenstruktur aufweist.

10. Verfahren nach einem der vorhergehenden Ansprüche, **dadurch gekennzeichnet, dass** die Enthärtungsgeschwindigkeit mit den Parametern Umwälzgeschwindigkeit des Wassers im elektrochemischen Reaktor (1) und/oder Anströmgeschwindigkeit des Wassers an die Elektroden (3, 4) und/oder der Temperatur des Wassers im elektrochemischen Reaktor (1) und/oder der Stromdichte an den Elektroden und/oder der angelegten Spannungsdifferenz an den Elektroden (3, 4) und/oder dem pH-Wert des Wassers im elektrochemischen Reaktor (1) gesteuert wird.

11. Verfahren nach Anspruch 10, **dadurch gekennzeichnet, dass** die Temperatur des Wassers im elektrochemischen Reaktor (1) mit einer Heizung (9) erhöht wird.

12. Verfahren nach einem der Ansprüche 10 oder 11, **dadurch gekennzeichnet, dass** die Umwälzgeschwindigkeit und/oder die Anströmgeschwindigkeit des Wassers im elektrochemischen Reaktor (1) mit einer Umwälzpumpe (8) und/oder einem Umwälzrotor im elektrochemischen Reaktor (1) gesteuert wird.

13. Verfahren nach einem der Ansprüche 10 bis 12, **dadurch gekennzeichnet, dass** der pH-Wert des Wassers im elektrochemischen Reaktor (1) durch das Auslassen des beim Enthärten entstehenden Kohlendioxids aus dem geschlossenen elektrochemischen Reaktor (1) mit einem Entlüftungsventil (6) gesteuert wird.

## Claims

1. Method for electrochemical, discontinuous descaling of water in a dishwasher with an electrochemical reactor (1), with a first and a second electrode (3, 4), in that water to be descaled is introduced into the electrochemical reactor (1),
- an electric voltage difference is applied between the first electrode (3) and the second electrode (4), in order to electrochemically descale the water in a treatment phase in the electrochemical reactor (1),
- the descaled water is conveyed out of the electrochemical reactor (1) for use as cleaning fluid, e.g. washing liquor in the water-conducting household appliance,
- in a treatment phase the first electrode always acts as anode (3) and the second electrode (4) always acts as cathode (4), wherein OH ions are formed on the cathode (4),
wherein, through an anodic carbonic acid formation a pH value reduction of the descaled water in the acid range takes place, in order to avoid stains forming in the final and intermediate rinse cycles in a dishwasher and/or to enhance the cleaning power, and an even number of polarity reversals of the electrodes (3, 4), especially before and after each regeneration phase, occurs outside the treatment phase.

2. Method according to claim 2, **characterised in that** the first electrode (3) and the second electrode (4) consist at least partly of a different material or substance.

3. Method according to one of the preceding claims, **characterised in that** no electric voltage difference is applied between the first electrode (3) and the second electrode (4) during the conveying of the descaled water out of the electrochemical reactor (1), in order to be able to make use of the inertial after-effect of the electrochemical descaling potential remaining after the switching off of the electric voltage difference between the first electrode (3) and the second electrode (4).

4. Method according to one of the preceding claims, **characterised in that** the calcium carbonate crystals forming on the cathode (4) are carried along at least partly by the descaled water as cleaning fluid, so that the calcium carbonate crystals act as seed crystals, on which scale occurring is deposited.

5. Method according to one of the preceding claims, **characterised in that** the descaled water is stored in a special buffer before being used a cleaning fluid.

6. Method according to one of the preceding claims, **characterised in that** at least one electrode (3, 4) has at least partly a pore structure.

7. Method according to one of the preceding claims, **characterised in that** the second electrode (4) consists at least partly of graphite or carbon fibres (10), preferably as an outer shroud for metal parts inside the second electrode (4) for conducting the current, which have a high affinity to alkaline earth salts, e.g. carbonate salts, in order to facilitate the deposition of the carbonate salts on the electrodes (3, 4) for example.

8. Method according to one of the preceding claims, **characterised in that** the anode (3) consists of titanium, titanium alloys or layered titanium metal, e.g. as flat or expanded metal or other metals for conducting the current.

9. Method according to claim 8, **characterised in that** the first electrode (3) has a smooth surface structure.

10. Method according to one of the preceding claims, **characterised in that** the speed of descaling is controlled with the parameters speed of circulation of the water in the electrochemical reactor (1) and/or inflow speed of the water to the electrodes (3, 4) and/or the temperature of the water in the electrochemical reactor (1) and/or the flow density at the electrodes and/or the applied voltage difference at the electrodes (3, 4) and/or the pH value of the water in the electrochemical reactor (1).

11. Method according to claim 10, **characterised in that** the temperature (1) of the water in the electrochemical reactor (1) is increased with a heater (9).

12. Method according to one of claims 10 or 11, **characterised in that** the speed of circulation and/or the inflow speed of the water in the electrochemical reactor (1) is controlled with a circulation pump (8) and/or a circulation rotor in the electrochemical reactor (1).

13. Method according to one of claims 10 to 12, **characterised in that** the pH value of the water in the electrochemical reactor (1) is controlled by the letting the carbon dioxide arising during the descaling out of the closed electrochemical reactor (1) with a ventilation valve (6).

## Revendications

1. Procédé de détartrage électrochimique discontinu de l'eau dans un lave-vaisselle, comprenant un réacteur électrochimique (1), comprenant une première et une deuxième électrodes (3, 4), dans lequel
- l'eau à détartrer est introduite dans le réacteur électrochimique (1),
- une différence de tension électrique entre la première électrode (3) et la deuxième électrode (4) est appliquée afin de détartrer l'eau de manière électrochimique dans le réacteur électrochimique (1) pendant une phase de traitement,
- l'eau détartrée est évacuée hors du réacteur électrochimique (1) pour être utilisée en tant que liquide de nettoyage, par ex. flotte de lavage, dans le lave-vaisselle,
- pendant une phase de traitement, la première électrode agit toujours en tant qu'anode (3) et la deuxième électrode (4) agit toujours en tant que cathode (4), des ions OH étant formés sur la cathode (4),
une baisse de l'indice pH de l'eau détartrée dans la zone acide ayant lieu par une formation d'acide carbonique anodique afin d'éviter la formation de taches et/ou d'augmenter la performance de nettoyage pendant des cycles de lavage à l'eau claire et des cycles de lavage intermédiaires dans le lave-vaisselle, et
- un nombre pair d'inversions de polarité des électrodes (3, 4), notamment avant et après chaque phase de régénération, est réalisé en dehors de la phase de traitement.

2. Procédé selon la revendication 1, **caractérisé en ce que** la première électrode (3) et la deuxième électrode (4) sont constituées au moins en partie d'une matière différente ou d'un matériau différent.

3. Procédé selon l'une quelconque des revendications précédentes, **caractérisé en ce que**, pendant l'évacuation de l'eau détartrée hors du réacteur électrochimique (1), aucune différence de tension électrique entre la première électrode (3) et la deuxième électrode (4) n'est appliquée afin de pouvoir exploiter le traînage inerte du potentiel de détartrage électrochimique restant après l'arrêt de la différence de tension électrique entre la première électrode (3) et la deuxième électrode (4).

4. Procédé selon l'une quelconque des revendications précédentes, **caractérisé en ce que** les cristaux de carbonate calcique se formant sur la cathode (4) sont entraînés au moins en partie par l'eau détartrée pour utilisation en tant que liquide de nettoyage, de sorte que les cristaux de carbonate calcique agissent en tant que germes sur lesquels se fixe le calcaire se précipitant.

5. Procédé selon l'une quelconque des revendications précédentes, **caractérisé en ce que** l'eau détartrée est stockée de manière intermédiaire dans un réservoir intermédiaire à part avant d'être utilisée en tant que liquide de nettoyage.

6. Procédé selon l'une quelconque des revendications précédentes, **caractérisé en ce qu'**au moins une électrode (3, 4) dispose au moins en partie d'une structure à pores.

7. Procédé selon l'une quelconque des revendications précédentes, **caractérisé en ce que** la deuxième électrode (4) est constituée au moins en partie de feutres de graphite ou de carbone (10), de préférence en tant qu'enveloppe extérieure pour des pièces métalliques à l'intérieur de la deuxième électrode (4) destinées à conduire le courant, qui présentent une haute affinité avec les sels alcalino-terreux, par ex. les sels de carbonate, afin de faciliter la fixation par ex. des sels de carbonate sur les électrodes (3, 4).

8. Procédé selon l'une quelconque des revendications précédentes, **caractérisé en ce que** l'anode (3) est constituée de titane, d'alliages de titane ou de métal en titane enduit, par ex. en tant que métal plat ou métal déployé, ou d'autres métaux destinés à conduire le courant.

9. Procédé selon la revendication 8, **caractérisé en ce que** la première électrode (3) présente une structure de surface lisse.

10. Procédé selon l'une quelconque des revendications précédentes, **caractérisé en ce que** la vitesse de détartrage est commandée au moyen des paramètres vitesse de circulation de l'eau dans le réacteur électrochimique (1) et/ou vitesse d'écoulement de l'eau contre les électrodes (3, 4) et/ou de la température de l'eau dans le réacteur électrochimique (1) et/ou de la densité du courant sur les électrodes et/ou de la différence de tension appliquée sur les électrodes (3, 4) et/ou de l'indice pH de l'eau dans le réacteur électrochimique (1).

11. Procédé selon la revendication 10, **caractérisé en ce que** la température de l'eau dans le réacteur électrochimique (1) est augmentée au moyen d'un dispositif de chauffage (9).

12. Procédé selon l'une quelconque des revendications 10 ou 11, **caractérisé en ce que** la vitesse de circulation et/ou la vitesse d'écoulement de l'eau dans le réacteur électrochimique (1) sont commandées dans le réacteur électrochimique (1) par une pompe de circulation (8) et/ou un rotor de circulation.

13. Procédé selon l'une quelconque des revendications 10 à 12, **caractérisé en ce que** l'indice pH de l'eau dans le réacteur électrochimique (1) est commandé par l'évacuation du gaz carbonique, se produisant lors du détartrage, hors du réacteur électrochimique fermé (1) au moyen d'une soupape d'aération (6).
